# EUROPÄISCHE PATENTSCHRIFT

(11) **EP 3 454 661 B1**
(45) Veröffentlichungstag und Bekanntmachung des Hinweises auf die Patenterteilung: **13.05.2020**
(21) Anmeldenummer: 17724508.1
(22) Anmeldetag: 05.05.2017
(51) Int. Cl.: A21B 3/07

(54) **VORRICHTUNG ZUR WAERMEBEHANDLUNG VON LEBENSMITTELPRODUKTEN MIT BESCHICKUNGSWAGEN**
DEVICE FOR THE HEAT TREATMENT OF FOOD PRODUCTS, COMPRISING CHARGING TROLLEYS
DISPOSITIF DE TRAITEMENT THERMIQUE DE PRODUITS ALIMENTAIRES POURVU DE CHARIOTS CHARGEURS

(30) Priorität: 09.05.2016 DE 202016102463 U
(43) Veröffentlichungstag der Anmeldung: 20.03.2019
(73) Patentinhaber: Wiesheu GmbH, 71723 Großbottwar (DE)
(72) Erfinder: RAMM, Alexander, 71706 Markgroeningen (DE); DROEGE, Falko, 71570 Oppenweiler (DE)
(74) Vertreter: Witte, Weller & Partner Patentanwälte mbB
(86) Internationale Anmeldenummer: PCT/EP2017/060763
(87) Internationale Veröffentlichungsnummer: WO 2017/194403

(56) Entgegenhaltungen:
- EP-A1- 1 908 350
- WO-A2-2013/124235
- DE-A1- 19 903 048
- DE-B3-102015 104 517
- FR-A- 1 458 682
- FR-A1- 2 566 998
- FR-A1- 2 682 855
- NL-C- 100 559
- US-A- 2 545 696
- US-A- 3 261 484

## Beschreibung

Die Erfindung betrifft eine Vorrichtung zur Wärmebehandlung von Lebensmittelprodukten, mit einer Wärmebehandlungeinrichtung, die mindestens eine Backofeneinheit mit einem Garraum aufweist, der zur Aufnahme von Produktträgern mit Lebensmittelprodukten ausgebildet ist, und mit mindestens einem Beschickungswagen zur Aufnahme mindestens eines Beschickungsgestells für eine Mehrzahl von Produktträgern, der mit der Wärmebehandlungeinrichtung koppelbar ist, um das mindestens eine Beschickungsgestell mit Produktträgern zwischen der mindestens einen Backofeneinheit und dem Beschickungswagen hin und her zu bewegen, und mit Mitteln zum Verfahren des mindestens einen Beschickungsgestells zwischen der mindestens einen Backofeneinheit und dem Beschickungswagen, wenn der Beschickungswagen mit der Wärmebehandlungeinrichtung gekoppelt ist und sich in einer Arbeitsposition befindet, und mit mindestens einer Koppeleinrichtung, die ein Ankoppeln des Beschickungswagens und Bewegen zwischen einer Einfahrposition und der Arbeitsposition erlaubt.

Eine derartige Vorrichtung ist aus der WO 2013/124235 A2 bekannt.

Mit der bekannten Vorrichtung kann ein einfaches Ein- und Ausfahren einer Mehrzahl von Produktträgern in die zugeordneten Backofeneinheiten gewährleistet werden.

Zwar ist bei dieser Vorrichtung grundsätzlich auch eine Koppeleinrichtung offenbart, die eine Positionierung des Beschickungswagens am Backofen in einer Arbeitsposition gewährleisten soll, jedoch ist nicht offenbart, wie eine derartige Koppeleinrichtung in der Praxis ausgeführt sein soll. Hierzu ist lediglich ein Anschlag in der Zeichnung erkennbar.

In der Praxis muss daher der Beschickungswagen bei einer derartigen Vorrichtung von Hand an die Backofeneinheiten angekoppelt werden und schließlich so präzise ausgerichtet werden, dass anschließend eine Übergabe des mindestens einen Beschickungsgestells zwischen den Beschickungswagen und der zugeordneten Backofeneinheit erfolgen kann. Dieser Vorgang kann sehr zeitaufwändig sein. Bodenunebenheiten und Höhenunterschiede am Beschickungswagen können ferner dazu führen, dass eine Übergabe des Beschickungsgestells zwischen dem Beschickungswagen und der zugeordneten Backofeneinheit ohne eine vorherige Nachjustierung gar nicht möglich ist oder zumindest deutlich erschwert wird.

Aus der deutschen Patentanmeldung 10 2015 104 517.6 ist es grundsätzlich bekannt, an der Wärmebehandlungeinrichtung Mitnehmer vorzusehen, denen am Beschickungswagen Aufnahmen zugeordnet sind, wobei ein Antrieb zum vertikalen Verfahren der Mitnehmer vorgesehen ist, um die Mitnehmer aus einer Einfahrposition des Beschickungswagens durch vertikales Anheben mit den Aufnahmen am Beschickungswagen zu koppeln und den Beschickungswagen bei weiterem Anheben an den Mitnehmern auszurichten, bis dieser in eine definierte Endlage in der Arbeitsposition gelangt.

In der Praxis wird hierzu allerdings ein Portal an der Vorderseite der Wärmebehandlungseinrichtung benötigt, an der die Mitnehmer vorgesehen sind, denen am Beschickungswagen die Aufnahmen zugeordnet sind.

Durch dieses vorgeordnete Portal wird der Bauraum erheblich vergrößert, was als nachteilig anzusehen ist.

Ferner wird auf die US 2 545 696 A, auf die US 3 261 484 A, auf die DE 199 03 048 A1, auf die FR 2 566 998 A1 und auf die FR 1 458 682 A1 hingewiesen.

Diese Druckschriften offenbaren Vorrichtungen zur Wärmebehandlung von Lebensmittelprodukten mit Backofeneinheiten, die unter Verwendung von Beschickungswagen be- und entladen werden können.

Vor diesem Hintergrund liegt der Erfindung die Aufgabe zugrunde, eine Vorrichtung gemäß der eingangs genannten Art derart zu verbessern, dass eine präzise Positionierung des Beschickungswagens in einer definierten Arbeitsposition auf einfache und zuverlässige Weise bei möglichst kleinem Bauraum gewährleistet wird.

Diese Aufgabe wird erfindungsgemäß bei einer Vorrichtung gemäß der eingangs genannten Art dadurch gelöst, dass an der Wärmebehandlungseinrichtung Mitnehmer vorgesehen sind, denen an jedem Beschickungswagen Aufnahmen zugeordnet sind, und dass ein Antrieb zum vertikalen Verfahren der Mitnehmer vorgesehen ist, um die Mitnehmer aus der Einfahrposition des Beschickungswagens durch vertikales Anheben mit den Aufnahmen am Beschickungswagen zu koppeln und den Beschickungswagen bei weiterem Anheben an den Mitnehmern auszurichten, bis dieser in eine definierte Endlage in der Arbeitsposition gelangt.

Die Aufgabe der Erfindung wird auf diese Weise vollkommen gelöst.

Indem die Mitnehmer nämlich vertikal nach oben verfahren werden, gelangen diese in Eingriff mit den zugeordneten Aufnahmen am Beschickungswagen und führen bei weiterem Anheben zur Ausrichtung des Beschickungswagens, bis dieser schließlich in eine definierte Endlage in der Arbeitsposition gelangt. Bodenunebenheiten und Höhenunterschiede des Beschickungswagens spielen keine Rolle, da der Beschickungswagen in die Arbeitsposition angehoben wird.

Auf diese Weise ist eine reproduzierbare, präzise Positionierung des Beschickungswagens in der Arbeitsposition gewährleistet.

In weiterer Ausgestaltung der Erfindung weist mindestens eine der Aufnahmen einen Vorsprung, vorzugsweise in Form eines stangenförmigen Elementes auf, der mit einem zugeordneten Mitnehmer zentrierbar ist.

In Folge des Vorsprungs, der mit einem Mitnehmer zentrierbar ist, lässt sich eine sehr einfach zentrierende Ausgestaltung erreichen. Vorzugsweise ist hierbei der Vorsprung in Form einer stangenförmigen Ausführung ausgebildet, was auch bei einer sehr ungenauen Positionierung eine Zentrierung erlaubt.

Gemäß einer weiteren Ausgestaltung der Erfindung weist eine der Aufnahmen am Beschickungswagen eine in Querrichtung verlaufende Führungsstange auf, die mit einem Mitnehmer an der Wärmebehandlungseinrichtung zentrierbar ist.

In zusätzlicher Weiterbildung dieser Ausführung sind an der Wärmebehandlungseinrichtung zwei zentrierende Mitnehmer vorgesehen, an der die Führungsstange ausrichtbar ist und mittels derer der Beschickungswagen in die Arbeitsposition anhebbar ist.

Auf diese Weise ist eine besonders einfache und präzise Ausrichtung des Beschickungswagens in Vertikalrichtung ermöglicht.

Gemäß einer weiteren Ausgestaltung der Erfindung ist am Beschickungswagen ein in Vertikalrichtung verlaufender Bolzen vorgesehen, dem zwei zentrierende Mitnehmer an der Wärmebehandlungsvorrichtung zugeordnet sind.

Auf diese Weise ist eine Ausrichtung und Verschiebung in Vertikalrichtung ermöglicht.

Vorzugsweise sind hierbei die zentrierenden Mitnehmer prismenförmig ausgebildet.

Obwohl grundsätzlich auch eine andere Ausführung, beispielsweise eine kreisabschnittsförmig gekrümmte Ausführung denkbar wäre, lässt sich mit prismenförmigen Mitnehmern eine besonders einfache und präzise Zentrierung erreichen.

Gemäß einer weiteren Ausgestaltung der Erfindung sind an der Wärmebehandlungsvorrichtung zwei Zentrierkulissen zur Zentrierung des Beschickungswagens beim Anfahren an die Wärmebehandlungsvorrichtung vorgesehen.

Hierdurch wird die Ausrichtung des Beschickungswagens beim Anfahren an die Wärmebehandlungseinrichtung unterstützt.

Gemäß einer weiteren Ausgestaltung der Erfindung sind die Mitnehmer im oberen Bereich und im unteren Bereich der Wärmebehandlungseinrichtung jeweils mittels eines eigenen Antriebs zur Zentrierung der zugeordneten Aufnahmen am Beschickungswagen verfahrbar, wobei die Antriebe über eine Steuerung synchronisiert sind.

So können einfache Antriebe für eine präzise Ausrichtung des Beschickungswagens genutzt werden.

Gemäß einer weiteren Ausgestaltung der Erfindung ist an der Wärmebehandlungsvorrichtung eine Sensoreinrichtung mit mindestens einem Sensor zur Detektion eines Beschickungswagens in der Einfahrposition vorgesehen.

Auf diese Weise kann sichergestellt werden, dass eine (automatische) Ausrichtung des Beschickungswagens und Überführung in seine Arbeitsposition erst dann gestartet wird, wenn sich ein Beschickungswagen in der Einfahrposition befindet.

Ferner ist an der Wärmebehandlungeinrichtung vorzugsweise ein weiterer Sensor vorgesehen, mittels dessen die vertikale Position des Beschickungswagens an der Wärmebehandlungeinrichtung überwacht wird, um eine definierte Endlage in der Arbeitsposition zu gewährleisten. Dies ist vorzugsweise mit einer Abschaltung des zugeordneten Antriebes gekoppelt, um so die definierte Endlage in Vertikalrichtung vorzugeben.

Auf diese Weise ist eine präzise Führung und präzise Positionierung gewährleistet.

Gemäß einer weiteren Ausgestaltung der Erfindung ist der mindestens eine Sensor als Näherungssensor, insbesondere optischer, kapazitiver oder induktiver Näherungssensor, ausgebildet.

Der Sensor ermöglicht sinnvollerweise ein Verfahren der Mitnehmer nur dann, wenn ein Beschickungswagen an der Wärmebehandlungseinrichtung detektiert wird.

Gemäß einer weiteren Ausgestaltung der Erfindung ist dem mindestens einen Beschickungsgestell eine Handlingeinrichtung zugeordnet, die eine automatische Übergabe zwischen Beschickungsgestell und der zugeordneten Backofeneinheit erlaubt.

Die Handlingeinrichtung kann hierbei insbesondere gemäß der eingangs genannten WO 2013/124235 A2 aufgebaut sein, die hier vollständig durch Bezugnahme eingeschlossen wird.

Weitere Merkmale und Vorteile der Erfindung ergeben sich aus der nachfolgenden Beschreibung bevorzugte Ausführungsbeispiele unter Bezugnahme auf die Zeichnung. Es zeigen:
- Fig. 1: eine Übersichtsdarstellung einer erfindungsgemäßen Vorrichtung zur Wärmebehandlung von Lebensmittelprodukten;
- Fig. 2: eine vergrößerte perspektivische Teilansicht der Wärmebehandlungseinrichtung an ihrer Unterseite, an die ein Beschickungswagen anfahrbar ist;
- Fig. 3: eine Ansicht gemäß Fig. 2, wobei zusätzlich ein angefahrener Beschickungswagen erkennbar ist und
- Fig. 4: eine vergrößerte Teilansicht des oberen Endes eines Beschickungswagens mit dem zugeordneten Teil der Wärmebehandlungseinrichtung.

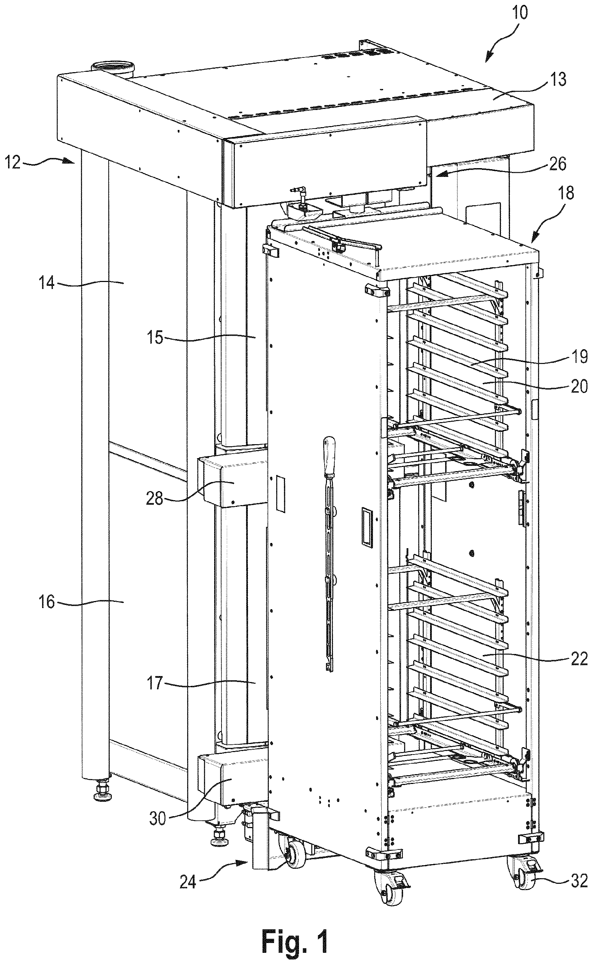

Fig. 1 zeigt eine erfindungsgemäße Vorrichtung zur Wärmebehandlung von Lebensmittelprodukten, die insgesamt mit der Ziffer 10 bezeichnet ist, in perspektivischer Ansicht.

Die Vorrichtung 10 weist eine Wärmebehandlungseinrichtung 12 auf, die zwei senkrecht übereinander angeordnete Backofeneinheiten 14, 16 aufweist, die jeweils einen Garraum 15, 17 aufweisen. Den oberen Abschluss bildet eine gemeinsame Dunstabzugshaube 13.

Zum Be- und Entladen der Backofeneinheiten 14, 16 ist ein auf Rollen 32 verfahrbarer Beschickungswagen 18 vorgesehen, in dem senkrecht übereinander jeweils ein Beschickungsgestell 20 bzw. 22 angeordnet ist, an dem Produktträger 19 zur Aufnahme von Lebensmittelprodukten, wie etwa Brötchen, aufgenommen sind.

Ist der Beschickungswagen 18 in geeigneter Weise an die Wärmebehandlungseinrichtung 12 angekoppelt, so können die Beschickungsgestelle 20 bzw. 22 automatisch an die jeweils zugeordnete Backofeneinheit 14 bzw. 16 übergeben werden oder daraus nach Beendigung eines Backvorgangs entnommen werden.

Die Wärmebehandlungseinrichtung 12 weist zwei Koppeleinrichtungen 24, 26 auf, die zum Ankoppeln des Beschickungswagens 18 dienen und zum Anheben in eine präzise Arbeitsposition.

Die Beschickungsgestelle 20, 22 sind in grundsätzlich bekannter Weise, etwa gemäß der WO 2013/124235 A2, auf Rollen verfahrbar und können mittels einer Handlingeinrichtung (nicht dargestellt) zwischen dem Beschickungswagen 18 und den jeweils zugeordneten Backofeneinheiten 14, 16 übergeben werden. Damit ein reibungsloser Übergang zwischen dem Beschickungswagen 18 und der jeweils zugeordneten Backofeneinheit 14, 16 oder umgekehrt ermöglicht ist, ist es erforderlich, dass sich der Beschickungswagen 18 in einer definierten Arbeitsposition befindet, so dass die Beschickungsgestelle 20, 22 ungehindert zwischen dem Beschickungswagen 18 und den zugeordneten Backofeneinheiten 14, 16 und umgekehrt verfahren werden können.

Ist der Beschickungswagen 18 an den Koppeleinrichtungen 24, 26 in geeigneter Weise angekoppelt, so dass sich der Beschickungswagen 18 in der zur Übergabe der Beschickungsgestelle 20, 22 zwischen dem Beschickungswagen 18 und den zugeordneten Backofeneinheiten 14, 16 geeigneten Arbeitsposition befindet, so wird über eine Arretiereinrichtung eine automatische Freigabe der Beschickungsgestelle 20, 22 bewirkt.

Die Koppeleinrichtungen 24, 26 ermöglichen es, den Beschickungswagen 18 aus einer nur manuell angesteuerten Einfahrposition an der Wärmebehandlungseinrichtung 12 in die definierte Arbeitsposition (und umgekehrt) zu überführen.

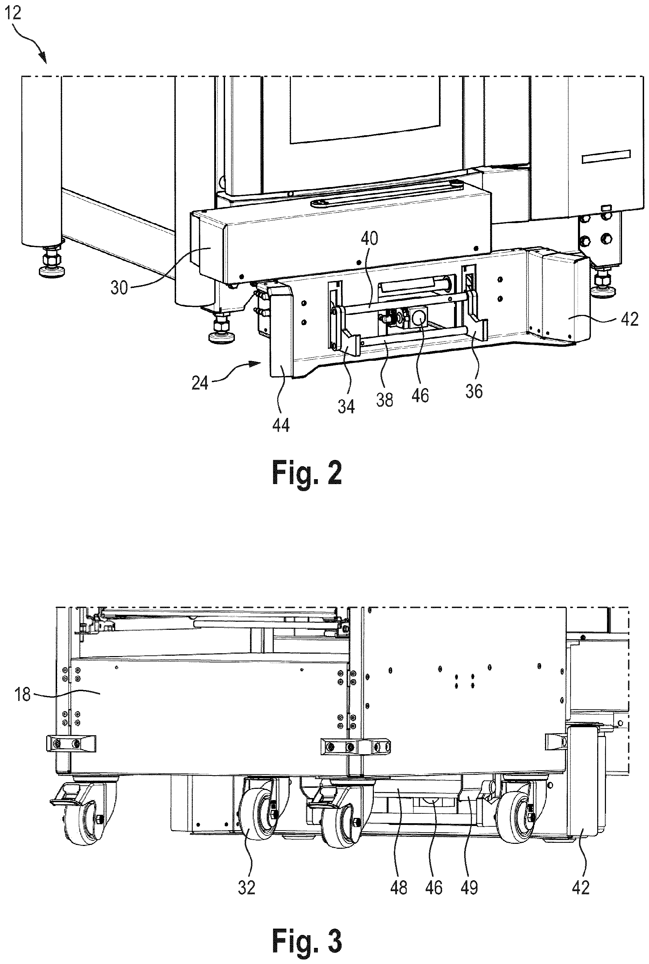

Hierzu wird der Beschickungswagen 18 zunächst in eine Einfahrposition an den Koppeleinrichtungen 24, 26 eingefahren. Hierbei dienen zwei seitlich schräg nach außen hervorstehende Einfahrkulissen 42, 44 für eine erste Zentrierung des Beschickungswagens 18 (vgl. Fig. 2).

Die untere Koppeleinrichtung 24 an der Wärmebehandlungseinrichtung 12 weist zwei prismenförmige Mitnehmer 34, 36 auf, die über zwei Querstangen 38, 40 miteinander verbunden sind. Die Mitnehmer 34, 36 wirken mit einer zugeordneten in Querrichtung verlaufenden Führungsstange 48 am unteren Ende des Beschickungswagens 18 (vgl. Fig. 3) zusammen, um eine Zentrierung des Beschickungswagens 18 zu erlauben. Zusätzlich ist am äußeren Ende der Führungsstange 48 jeweils eine schräg nach unten abstehende Führungsnase 49 vorgesehen (nur die rechte in Fig. 3 erkennbar), die mit der unteren Querstange 38 an der Koppeleinrichtung 24 zusammenwirkt.

Am oberen Ende des Beschickungswagens 18 ist die obere Koppeleinrichtung 26 vorgesehen, mittels derer eine Ausrichtung des Beschickungswagens 18 an dessen oberen Ende erreicht wird.

Hierzu ist ein vertikaler Bolzen 50 am Beschickungswagen 18 vorgesehen, der mittig angeordnet ist und nach oben hervorsteht. Dem Bolzen 50 sind zwei prismenförmige Mitnehmer 52, 54 zugeordnet, die von außen gegen den Bolzen 50 verfahrbar sind. Mit den Mitnehmern 52, 54 wird eine Zentrierung des Beschickungswagens 18 in Querrichtung gewährleistet.

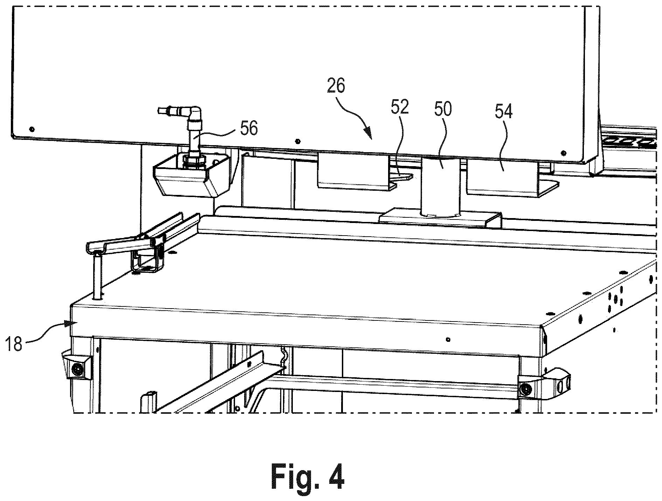

Zusätzlich ist an der Wärmebehandlungseinrichtung 12 ein Näherungssensor 56 (Fig. 4) vorgesehen, mittels dessen detektiert werden kann, ob der Beschickungswagen 18 nach Anheben mittels der Prismen 34, 36 seine definierte Arbeitsposition in Vertikalrichtung erreicht hat.

Zum Ankoppeln des Beschickungswagens 18 wird dieser zunächst an die Wärmebehandlungseinrichtung 12 angefahren, bis die Führungsstange 48 an den prismenförmigen Mitnehmern 34, 36 angreift. Dies wird durch einen Näherungssensor 46 an der unteren Koppeleinrichtung 24 detektiert.

Dann werden an der oberen Koppeleinrichtung 26 die prismenförmigen Mitnehmer 52, 54 zugefahren, so dass der Beschickungswagen 18 an seinem oberen Ende mittels des Bolzens 50 ausgerichtet ist.

Die prismenförmigen Mitnehmer 34, 36 werden nunmehr nach oben angehoben, bis der Beschickungswagen 18 seine definierte Arbeitsposition erreicht, was durch den Sensor 56 detektiert wird. Der Bolzen 50 in Verbindung mit den prismenförmigen Mitnehmern 52, 54 erlaubt dabei das Verschieben in Vertikalrichtung, bis der Sensor 56 anspricht und der Antrieb automatisch abgeschaltet wird.

Hat der Beschickungswagen 18 seine definierte Endlage in der Arbeitsposition erreicht, so kann nunmehr die Übergabe der Beschickungsgestelle 20, 22 zwischen dem Beschickungswagen 18 und den zugeordneten Backofeneinheiten 14, 16 mittels zugeordneter Handlingeinrichtungen (nicht dargestellt) an der Wärmebehandlungseinrichtung 12 durchgeführt werden, die in der aus der WO 2013/124235 A2 bekannten Weise aufgebaut sein können.

Sollen Produktträger 19 nach dem Ende eines Backprozesses aus den Backofeneinheiten 14, 16 entnommen werden, so werden die Beschickungsgestelle 20, 22 mittels der Handlingeinrichtungen in den Beschickungswagen 18 bis in die Endposition ausgefahren. Dann kann der Beschickungswagen 18 wieder vertikal nach unten verfahren werden, wodurch die Arretiereinrichtung die Beschickungsgestelle 20, 22 wieder mittels zugeordneter Schwerkraftfallen verriegelt und der Beschickungswagen 18 schließlich wieder mit seinen Rollen 32 auf dem Boden steht.

Nur in diesem Fall kann das Programm zum Anheben des Beschickungswagens 18 in die Arbeitsposition bzw. zum Absenken des Beschickungswagens 18 aus der Arbeitsposition in die Einfahrposition gestartet werden.

Die gesamte Vorrichtung ist vorzugsweise über eine zentrale Steuerung programmgesteuert zu bedienen. Dies bedeutet, dass lediglich ein Beschickungswagen 18 in die Einfahrposition eingefahren werden muss und dass dann nach Detektion durch den Näherungsschalter 46 die Koppeleinrichtungen 24, 26 programmgesteuert gestartet werden können, um den Beschickungswagen 18 in die Arbeitsposition zu bewegen. Sind die Beschickungsgestelle 20, 22 in die Backofeneinheiten 14, 16 verfahren, so dass diese beladen sind, so kann der gewünschte Wärmebehandlungszyklus programmgesteuert ablaufen.

Nach Ende des Wärmebehandlungsvorgangs können die Beschickungsgestelle 20, 22 wieder mittels der zugeordneten Handlingeinrichtungen in den Beschickungswagen 18 verfahren werden und dann das Programm zum Absenken des Beschickungswagens 18 in die Einfahrposition gestartet werden.

## Patentansprüche

1. Vorrichtung zur Wärmebehandlung von Lebensmittelprodukten, mit einer Wärmebehandlungeinrichtung (12), die mindestens eine Backofeneinheit (14, 16) mit einem Garraum (15, 17) aufweist, der zur Aufnahme von Produktträgern (19) mit Lebensmittelprodukten ausgebildet ist, und mit mindestens einem Beschickungswagen (18) zur Aufnahme mindestens eines Beschickungsgestells (20, 22) für eine Mehrzahl von Produktträgern (19), der mit der Wärmebehandlungeinrichtung (12) koppelbar ist, um das mindestens eine Beschickungsgestell (20, 22) mit Produktträgern (19) zwischen der mindestens einen Backofeneinheit (14, 16) und dem Beschickungswagen (18) hin und her zu bewegen, und mit Mitteln zum Verfahren des mindestens einen Beschickungsgestells (20, 22) zwischen der mindestens einen Backofeneinheit (14, 16) und dem Beschickungswagen (18), wenn der Beschickungswagen (18) mit der Wärmebehandlungseinrichtung (12) gekoppelt ist und sich in einer Arbeitsposition befindet, und mit einer Positioniereinrichtung (24), die ein Ankoppeln des Beschickungswagens (18) und Bewegen zwischen einer Einfahrposition und der Arbeitsposition erlaubt, **dadurch gekennzeichnet, dass** an der Wärmebehandlungseinrichtung (12) Mitnehmer (34, 36, 52, 54) vorgesehen sind, denen an jedem Beschickungswagen (18) Aufnahmen (48, 49, 50) zugeordnet sind, und dass ein Antrieb (46) zum vertikalen Verfahren der Mitnehmer (34, 36, 52, 54) vorgesehen ist, um die Mitnehmer (34, 36, 52, 54) aus der Einfahrposition des Beschickungswagens (18) durch vertikales Anheben mit den Aufnahmen (48, 49, 50) am Beschickungswagen (18) zu koppeln und den Beschickungswagen (18) bei weiterem Anheben an den Mitnehmern (34, 36, 52, 54) auszurichten, bis dieser in eine definierte Endlage in der Arbeitsposition gelangt.

2. Vorrichtung nach Anspruch 1, **dadurch gekennzeichnet, dass** mindestens eine (48, 50) der Aufnahmen einen Vorsprung, vorzugsweise in Form eines stangenförmigen Elements aufweist, der mit einem zugeordneten Mitnehmer (34, 36, 52, 54) zentrierbar ist.

3. Vorrichtung nach Anspruch 1 oder 2, **dadurch gekennzeichnet, dass** eine der Aufnahmen (48, 49, 50) am Beschickungswagen (18) eine in Querrichtung verlaufende Führungsstange (48) aufweist, die mit einem Mitnehmer (34, 36) an der Wärmebehandlungseinrichtung (12) zentrierbar ist.

4. Vorrichtung nach Anspruch 3, **dadurch gekennzeichnet, dass** an der Wärmebehandlungseinrichtung (12) zwei zentrierende Mitnehmer (34, 36) vorgesehen sind, an der die Führungsstange (48) ausrichtbar ist und mittels derer der Beschickungswagen (18) in die Arbeitsposition anhebbar ist.

5. Vorrichtung nach einem der vorhergehenden Ansprüche, **dadurch gekennzeichnet, dass** am Beschickungswagen (18) ein in Vertikalrichtung verlaufender Bolzen (50) vorgesehen ist, dem zwei zentrierende Mitnehmer (52, 54) an der Wärmebehandlungseinrichtung (12) zugeordnet sind.

6. Vorrichtung nach Anspruch 4 oder 5, **dadurch gekennzeichnet, dass** die zentrierenden Mitnehmer (34, 36, 52, 54) prismenförmig ausgebildet sind.

7. Vorrichtung nach einem der vorhergehenden Ansprüche, **dadurch gekennzeichnet, dass** an der Wärmebehandlungsvorrichtung (12) zwei Zentrierkulissen (42, 44) zur Zentrierung des Beschickungswagens (18) beim Anfahren an die Wärmebehandlungsvorrichtung (12) vorgesehen sind.

8. Vorrichtung nach einem der vorhergehenden Ansprüche, **dadurch gekennzeichnet, dass** Mitnehmer (34, 36, 52, 54) im unteren Bereich und im oberen Bereich der Wärmebehandlungseinrichtung jeweils mittels eines eigenen Antriebs zur Zentrierung der zugeordneten Aufnahmen (48, 49, 50) am Beschickungswagen (18) verfahrbar sind, wobei die Antriebe über eine Steuerung synchronisiert sind.

9. Vorrichtung nach einem der vorhergehenden Ansprüche, **dadurch gekennzeichnet, dass** an der Wärmebehandlungsvorrichtung (12) ein Sensor (46) zur Detektion eines Beschickungswagens (18) in der Einfahrposition vorgesehen ist.

10. Vorrichtung nach Anspruch 9, **dadurch gekennzeichnet, dass** an der Wärmebehandlungsvorrichtung (12) ein Sensor (56) vorgesehen ist, der zur Detektion des Beschickungswagens (18) in seiner Arbeitsposition ausgebildet ist.

11. Vorrichtung nach Anspruch 9 oder 10, **dadurch gekennzeichnet, dass** der Sensor (46, 56) als Näherungssensor, insbesondere optischer, kapazitiver oder induktiver Näherungssensor, ausgebildet ist.

12. Vorrichtung nach einem der Ansprüche 9 bis 11, **dadurch gekennzeichnet, dass** der Sensoren (46) ein Verfahren der Mitnehmer (34, 36, 52, 54) nur dann freigibt, wenn ein Beschickungswagen (18) in der Einfahrposition detektiert wird.

13. Vorrichtung nach einem der vorhergehenden Ansprüche, **dadurch gekennzeichnet, dass** dem mindestens einen Beschickungsgestell (20, 22) eine Handlingeinrichtung (28, 30) zugeordnet ist, die eine automatische Übergabe zwischen Beschickungsgestell (20, 22) und der zugeordneten Backofeneinheit (14, 16) erlaubt.

## Claims

1. Device for the heat treatment of food products, comprising a heat treatment device (12) having at least one baking unit (14, 16) including a cooking chamber (15, 17) being configured for receiving product carriers (19) with food products, and further comprising at least one charging trolley (18) for receiving at least one charging rack (20, 22) for a plurality of product carriers (19), which can be coupled with the heat treatment device (12) for moving the at least one charging rack (20, 22) with product carriers (19) between the at least one oven unit (14, 16) and the charging trolley (18) back and forth, and further comprising means for moving the at least one charging rack (20, 22) between the at least one oven unit (14, 16) and the charging trolley (18), when the charging trolley (18) is coupled to the heat treatment device (12) and is within a working position, further comprising a positioning device (24) that allows a coupling of the charging trolley (18) and a moving between a charging position and the working position, **characterized in that** at the heat treatment device (12) there are provided catches (34, 36, 52, 54) to which at the charging trolley (18) there are assigned receptacles (48, 49, 50), and **in that** a drive (46) for a vertical movement of the catches (34, 36, 52, 54) is provided for coupling the catches (34, 36, 52, 54) from a charging position of the charging trolley (18) by vertical lifting to the receptacles (48, 49, 50) at the charging trolley (18), and for aligning the charging trolley (18) during further lifting to the catches (34, 36, 52, 54), until it reaches a defined final position within the working position.

2. Device according to claim 1, **characterized in that** at least one (48, 50) of the receptacles comprises a protrusion, preferably in the shape of a rod-shaped element, which can be centered with an assigned catch (34, 36, 52, 54).

3. Device according to claim 1 or 2, **characterized in that** one of the receptacles (48, 49, 50) at the charging trolley (18) comprises a guiding rod (48) extending in lateral direction which can be centered with a catch (34, 36) located at the heat treatment device (12).

4. The device according to claim 3, **characterized in that** at the heat treatment device (12) there are provided two centering catches (34, 36) along which the guiding rod (48) can be aligned, and by means of which the charging trolley (18) can be lifted into the working position.

5. Device according to any of the preceding claims, **characterized in that** at the charging trolley (18) there is provided a bolt (50) extending in vertical direction, to which there are assigned two centering catches (52, 54) provided at the heat treatment device (12).

6. The device according to claim 4 or 5, **characterized in that** the centering catches (34, 36, 52, 54) are configured in prismatic shape.

7. Device according to any of the preceding claims, **characterized in that** at the heat treatment device (12) there are provided two centering cranks (52, 54) for centering the charging trolley (18) when running against the heat treatment device (12).

8. Device according to any of the preceding claims, **characterized in that** catches (34, 36, 52, 54) in the lower region and in the upper region of the heat treatment device can each be displaced by means of an individual drive for centering the assigned receptacles (48, 49, 50) at the charging trolley (18), wherein the drives are synchronized by means of a control.

9. Device according to any of the preceding claims, **characterized in that** at the heat treatment device (12) there is provided a sensor (46) for detecting a charging trolley (18) within the charging position.

10. Device according to claim 9, **characterized in that** at the heat treatment device (12) there is provided a sensor (56) which is configured for detecting the charging trolley (18) within its working position.

11. Device according to claim 9 or 10, **characterized in that** the sensor (46, 56) is configured as a proximity sensor, in particular as an optical, capacitive or inductive proximity sensor.

12. Device according to any of claims 9 to 11, **characterized in that** the sensor allows a displacement of the catches (34, 36, 52, 54) only if a charging trolley (18) is detected within the charging position.

13. Device according to any of the preceding claims, **characterized in that** a handling device (28, 30) is assigned to the at least one charging rack (20, 22) for allowing an automatic transfer between the charging rack (20, 22) and the assigned baking unit (14, 16).

## Revendications

1. Dispositif pour le traitement thermique de produits alimentaires, comprenant un appareil de traitement thermique (12) qui présente au moins une unité de four de cuisson (14, 16) avec un espace de cuisson (15, 17) qui est réalisé pour recevoir des supports de produits (19) avec des produits alimentaires et comprenant au moins un chariot de chargement (18) pour recevoir au moins un bâti de chargement (20, 22) pour une pluralité de supports de produits (19), qui peut être accouplé à l'appareil de traitement thermique (12) afin de déplacer d'avant en arrière l'au moins un bâti de chargement (20, 22) avec des supports de produits (19) entre l'au moins une unité de four de cuisson (14, 16) et le chariot de chargement (18), et comprenant des moyens pour déplacer l'au moins un bâti de chargement (20, 22) entre l'au moins une unité de four de cuisson (14, 16) et le chariot de chargement (18) lorsque le chariot de chargement (18) est accouplé à l'appareil de traitement thermique (12) et se trouve dans une position de travail, et comprenant un appareil de positionnement (24) qui permet un accouplement du chariot de chargement (18) et un déplacement entre une position d'entrée et la position de travail, **caractérisé en ce que** des éléments d'entraînement (34, 36, 52, 54) sont prévus au niveau de l'appareil de traitement thermique (12), auxquels sont associés, sur chaque chariot de chargement (18), des logements (48, 49, 50), et **en ce qu'**un entraînement (46) pour le déplacement vertical des éléments d'entraînement (34, 36, 52, 54) est prévu, afin d'accoupler les éléments d'entraînement (34, 36, 52, 54) provenant de la position d'entrée du chariot de chargement (18) par soulèvement vertical aux logements (48, 49, 50) au niveau du chariot de chargement (18), est d'orienter le chariot de chargement (18) lors d'un soulèvement supplémentaire au niveau des éléments d'entraînement (34, 36, 52, 54) jusqu'à ce que celui-ci parvienne dans une position finale définie dans la position de travail.

2. Dispositif selon la revendication 1, **caractérisé en ce qu'**au moins l'un (48, 50) des logements présente une saillie, de préférence en forme d'élément en forme de barre qui peut être centrée avec un élément d'entraînement associé (34, 36, 52, 54).

3. Dispositif selon la revendication 1 ou 2, **caractérisé en ce que** l'un des logements (48, 49, 50) sur le chariot de chargement (18) présente une barre de guidage (48) s'étendant dans la direction transversale, laquelle peut être centrée avec un élément d'entraînement (34, 36) sur l'appareil de traitement thermique (12).

4. Dispositif selon la revendication 3, **caractérisé en ce que** deux éléments d'entraînement de centrage (34, 36) sont prévus au niveau de l'appareil de traitement thermique (12), au niveau desquels peut être orientée la barre de guidage (48) et au moyen desquels le chariot de chargement (18) peut être soulevé dans la position de travail.

5. Dispositif selon l'une quelconque des revendications précédentes, **caractérisé en ce qu'**un boulon (50) s'étendant dans la direction verticale est prévu au niveau du chariot de chargement (18), auquel sont associés deux éléments d'entraînement de centrage (52, 54) au niveau de l'appareil de traitement thermique (12).

6. Dispositif selon la revendication 4 ou 5, **caractérisé en ce que** les éléments d'entraînement de centrage (34, 36, 52, 54) sont réalisés en forme de prismes.

7. Dispositif selon l'une quelconque des revendications précédentes, **caractérisé en ce que** deux coulisses de centrage (42, 44) pour le centrage du chariot de chargement (18) lors de son avancée sur l'appareil de traitement thermique (12) sont prévues au niveau de l'appareil de traitement thermique (12).

8. Dispositif selon l'une quelconque des revendications précédentes, **caractérisé en ce que** des éléments d'entraînement (34, 36, 52, 54) dans la région inférieure et dans la région supérieure de l'appareil de traitement thermique peuvent à chaque fois être déplacés au moyen d'un entraînement propre en vue du centrage des logements associés (48, 49, 50) sur le chariot de chargement (18), les entraînements étant synchronisés par le biais d'une commande.

9. Dispositif selon l'une quelconque des revendications précédentes, **caractérisé en ce qu'**un capteur (46) pour la détection d'un chariot de chargement (18) dans la position d'entrée est prévu au niveau du dispositif de traitement thermique (12).

10. Dispositif selon la revendication 9, **caractérisé en ce qu'**un capteur (56) est prévu au niveau du dispositif de traitement thermique (12), lequel est réalisé pour détecter le chariot de chargement (18) dans sa position de travail.

11. Dispositif selon la revendication 9 ou 10, **caractérisé en ce que** le capteur (46, 56) est réalisé sous forme de capteur de proximité, en particulier de capteur de proximité optique, capacitif ou inductif.

12. Dispositif selon l'une quelconque des revendications 9 à 11, **caractérisé en ce que** le capteur (46) n'autorise un déplacement des éléments d'entraînement (34, 36, 52, 54) que lorsqu'un chariot de chargement (18) est détecté dans la position d'entrée.

13. Dispositif selon l'une quelconque des revendications précédentes, **caractérisé en ce qu'**un appareil de traitement (28, 30) est associé à l'au moins un bâti de chargement (20, 22), lequel permet un transfert automatique entre le bâti de chargement (20, 22) et l'unité de four de cuisson associée (14, 16).
